## Europäisches Patentamt

## European Patent Office

## Office européen des brevets

(11) Veröffentlichungsnummer: **0 152 567**
**B1**

(12) **EUROPÄISCHE PATENTSCHRIFT**

(45) Veröffentlichungstag der Patentschrift:
**12.08.87**

(51) Int. Cl.⁴: **B 60 B 21/10,** B 60 C 15/02

(21) Anmeldenummer: **84114703.6**

(22) Anmeldetag: **04.12.84**

(54) **Fahrzeugrad.**

(30) Priorität: **15.02.84 DE 3405363**

(43) Veröffentlichungstag der Anmeldung:
**28.08.85 Patentblatt 85/35**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**EP-A-0 111 118**
**DE-A-3 000 428**
**DE-A-3 331 870**
**DE-C-68 715**
**GB-A-282 963**
**US-A-1 903 575**
**US-A-4 169 496**

(73) Patentinhaber: **Continental Gummi- Werke Aktiengesellschaft, Königsworther Platz 1, D-3000 Hannover 1 (DE)**

(72) Erfinder: **Rach, Heinz- Dieter, Dipl.- Ing., Planetenring 32, D-3008 Garbsen 1 (DE)**
Erfinder: **Klose, Hans- Ulrich, Dipl.- Ing., Hauptstrasse 15, D-3061 Wiedensahl (DE)**
Erfinder: **Frerichs, Udo, Dipl.- Ing., Buchenweg 7, D-3012 Langenhagen 8 (DE)**

## Beschreibung

Die Erfindung betrifft ein luftbereiftes Fahrzeugrad mit einer starren Felge und mit einem Fahrzeugluftreifen aus Gummi oder gummiähnlichen Kunststoffen, der eine Karkasse aufweist, die in den Wülsten durch Umschlingen von zug- und druckfesten Wulstkernen verankert ist, bei dem die Felge sich im wesentlichen radial nach innen erstreckende Felgenhörner und neben diesen am radial inneren Umfang Sitzflächen für den Reifen und neben den Sitzflächen Montagehochbetten aufweist, die von senkrechten und/oder schrägen Wänden der Felge begrenzt werden.

Ein solches Fahrzeugrad ist zum Beispiel aus der DE-A- 30 00 428 bekannt und auch in einer älteren deutschen Patentanmeldung P 33 31 870.0, nunmehr DE-A- 33 31 870, beschrieben. Fahrzeugräder dieser Art, die bereits bei einem normalen Fahrbetrieb hervorragende Fahreigenschaften aufweisen und bei denen der Reifen im Falle einer Panne noch in einem erheblichen Umfang gefahren werden kann, ohne daß Folgeschäden auftreten, weisen einen prinzipiellen Nachteil insoweit auf, als durch die Anbringung der Reifenwülste auf der radial inneren Seite der Felge hinter den Reifenwülsten ein Raum entsteht, aus dem eingedrungenes Regen- oder Waschwasser nicht mehr abfließen kann und in dem sich Schmutz festsetzt.

Zur Vermeidung dieser Nachteile ist bereits vorgeschlagen worden, den genannten Einbauraum mit dem Montagehochbett nach der Reifenmontage mit Hilfe eines Füllrings zu verschließen oder mittels eines Abdeckrings zu schützen (deutsche Patentanmeldung P 32 37 544.1, nunmehr DE-A- 32 37 544). Beides ist jedoch recht aufwendig und hat eine nicht unerhebliche Erhöhung des Gesamtgewichts zur Folge.

Der Erfindung liegt deshalb die Aufgabe zugrunde, bei einem Fahrzeugrad der eingangs genannten Art den Einbauraum im Bereich des Montagehochbetts auf einfachere Weise zu verschließen.

Diese Aufgabe wird erfindungsgemäß mit den Merkmalen des Patentanspruchs 1 gelöst.

Der Hauptvorteil der Erfindung ist darin zu sehen, daß zum Verschließen des Montagehochbetts überhaupt kein separates Bauteil mehr erforderlich ist und daß nach dem vollständigen Einführen des Reifenwulstes in den Einbauraum im Bereich des Montagehochbetts der Reifen sich beim Aufpumpen von allein in seine Betriebsstellung bewegt und dabei automatisch den gefährdeten Raum im Bereich des Montagehochbetts verschließt. Es kommt also zusätzlich zum Vorteil der Einsparung eines Bauteils eine Zeitersparnis und eine Gewichtseinsparung hinzu.

Vorteilhafte Ausgestaltungen der Erfindung sind den Unteransprüchen zu entnehmen.

Nachfolgend werden mehrere Ausführungsbeispiele der Erfindung anhand einer Zeichnung näher erläutert.

Es zeigt

Fig. 1 ein Fahrzeugrad mit einem Einbauraum für den Reifenwulst und mit einem radial äußeren Tiefbett, dessen Seitenwand die axial und radial innere Begrenzung des Einbauraums bildet, in einem radialen Teilschnitt,

Fig. 2 einen Ausschnitt eines Fahrzeugrads, bei dem die Felge mit breiteren Stützflächen zum Abstützen des Reifens bei einem Notlauf versehen ist,

Fig. 3 ein Fahrzeugrad mit einem Reifenwulst-Einbauraum, der von einer Seitenwand des radial äußeren Tiefbetts und von einer Verlängerung des Tiefbettbodens begrenzt wird, in einem radialen Teilschnitt,

Fig. 4 einen Ausschnitt eines Fahrzeugrads mit einem Hochbett verringerter radialer Erstreckung und mit einem Reifenwulst, in dem der Kern exzentrisch gelagert ist,

Fig. 5 das Rad nach Fig. 4 mit dem Wulst in Montagestellung.

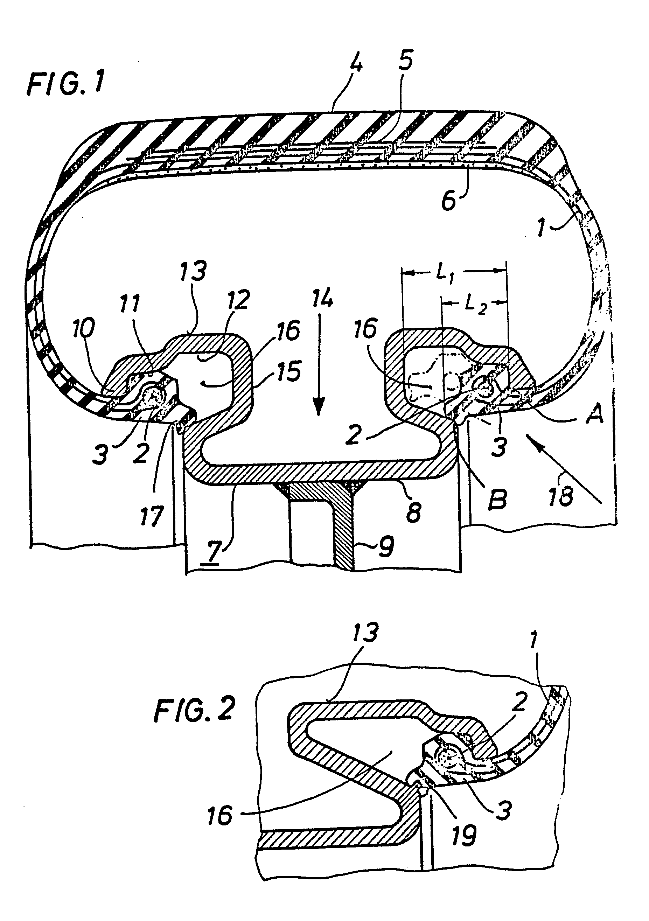

In Fig. 1 ist ein Fahrzeugrad im montierten Zustand dargestellt. Der verwendete Fahrzeugluftreifen, der im wesentlichen aus Gummi oder gummiähnlichen Stoffen besteht, weist eine Radialkarkasse 1 auf - gegebenenfalls kann es auch eine Winkelkarkasse sein -, die mit ihren Enden durch Umschlingen von zug- und druckfesten Wulstkernen 2 in den Wülsten 3 verankert ist. Unterhalb vom Laufstreifen 4 zwischen diesem und der Karkasse 1 befindet sich ein in Umfangsrichtung zugfester, aus zwei oder mehreren Cordgewebelagen bestehender Gürtel 5, der die Seitenstabilisierung des Reifenkörpers bewirkt. Der Reifen weist zudem an seiner Innenfläche etwa in dem Bereich des Laufstreifens 4 eine dünne Gleitschicht 6 auf, die ein reibungsarmes Abstützen auf der Felge 7 im Falle einer Panne ermöglicht.

Der bevorzugt aus Metall bestehende Felgenkranz 8 einer einteiligen Felge 7 ist an einer Felgenschüssel 9 angeschweißt und endet im Querschnitt gesehen seitlich außen in einem im wesentlichen sich nach radial innen erstreckenden Felgenhorn 10, neben dem sich am radial inneren Umfang des Felgenkranzes 8 Sitzflächen 11 für die Reifenwülste 3 befinden. Neben den Sitzflächen 11 schließen sich nach axial innen hin Montagehochbetten 12 für die Reifenwülste 3 an. Auf Höhe der Montagehochbetten 12 sind die radial äußeren Teile des Felgenkranzes 8 zu Stützflächen 13 für den Reifen ausgebildet. In der Mitte des Felgenkranzes 8 befindet sich ein nach radial außen offenes Tiefbett 14, das sich nach radial innen hin aufweitet, so daß die das Tiefbett 14 begrenzenden Seitenwände 15 des Felgenkranzes 8 zunächst vertikal und dann schräg nach seitlich außen verlaufen.

Durch die beschriebene Form des Felgenkranzes 8 wir ein dreiseitig geschlossener Einbauraum 16 für den Reifenwulst 3 gebildet, während die vierte Seite nach der Reifenmontage durch den Reifenwulst 3 selbst verschlossen wird. Dazu weist der Reifenwulst 3 in seinem radial und axial inneren Bereich eine umlaufende Nase 17 auf. Um eine gute Schließ- bzw. Dichtwirkung zu erzielen, kann die Nase 17 aus einem relativ weichen Gummi hergestellt und derart groß bemessen sein, daß sie unter großer Verformung einen starken Druck auf den benachbarten Felgenteil ausübt.

Zur Montage des Reifens wir die Felge 7 zunächst im wesentlichen senkrecht zum Reifen auf diesen zubewegt, bis sie mit ihrem größten Durchmesser im Innenraum des Reifens liegt. Nach einer Drehung von ca. 90° verlaufen die Rotationsachsen von Reifen und Felge 7 parallel, und die Reifenwülste 3 befinden sich seitlich außen neben den zugehörigen Felgenhörnern 10.

Zunächst wird der eine Reifenwulst 3 - gegebenenfalls unter geringfügiger Schwenkung um den Wulstkern 2 - in Richtung des Pfeils 18 (Fig. 1) in den Einbairaum 16 zwischen Felgenhornspitze A und der Kante B der Tiefbettseitenwand 15 eingeführt. Es ist ohne weiteres ersichtlich, daß für ein sicheres Abdichten des Einbauraums 16 der Durchmesser des Reifenwulstes 3 in Betriebsstellung in der Richtung A-B mir estens so groß sein muß wie der Abstand $\bar{A}\bar{B}$, daß jedoch bei der Montage die Projektion des Wulstdurchmessers auf eine Senkrechte zur Einführungsrichtung (Pfeil 18) kleiner sein muß als der Abstand $\bar{A}\bar{B}$.

Das Montagehochbett 12 ist derart bemessen, daß der Reifenwulst 3 bei vollständiger Einführung auf der gegenüberliegenden Seite über das Felgenhorn 10 gehoben werden kann. Die lichte Weite $L_1$ zwischen Felgenhorn 10 und der seitlichen Begrenzungswand 15 des Hochbetts 12 sollte mindestens das 1,5-fache der Breite $L_2$ betragen, die die Projektion der Wulstbreite (in Betriebsstellung) auf eine Waagerechte einnimmt.

Nachdem sich beide Reifenwülste 3 mit ihrem gesamten Umfang in dem jeweiligen Einbauraum 16 mit dem Hochbett 12 befinden, wird der Reifen mit Luft beaufschlagt. Dabei werden die Reifenwülste 3 unter gleichzeitiger Rückschwenkung um die Wulstkerne 2 auf die Felgensitzflächen 11 gezogen, und es erfolgt automatisch eine Verschließung des Einbauraums 16 durch die Nasen 17. Zum Demontieren des Reifens wird ein Montagewerkzeug im Bereich der Nase 17 angesetzt und in den Einbauraum 16 hineingedrückt.

Das Rad nach Fig. 2 unterscheidet sich von dem gemäß Fig. 1 zum einen durch eine breitere Ausbildung der Stützflächen 13 für den Reifen, zum anderen dadurch, daß zur besseren Abdichtung des Einbauraums 16 die Felge 7 einen umlaufenden Steg 19 und die Nase 17 eine entsprechende Nut aufweist. Gegebenenfalls kann auch umgekehrt die Felge 7 mit einer Nut und die Nase 17 mit einem Steg versehen sein.

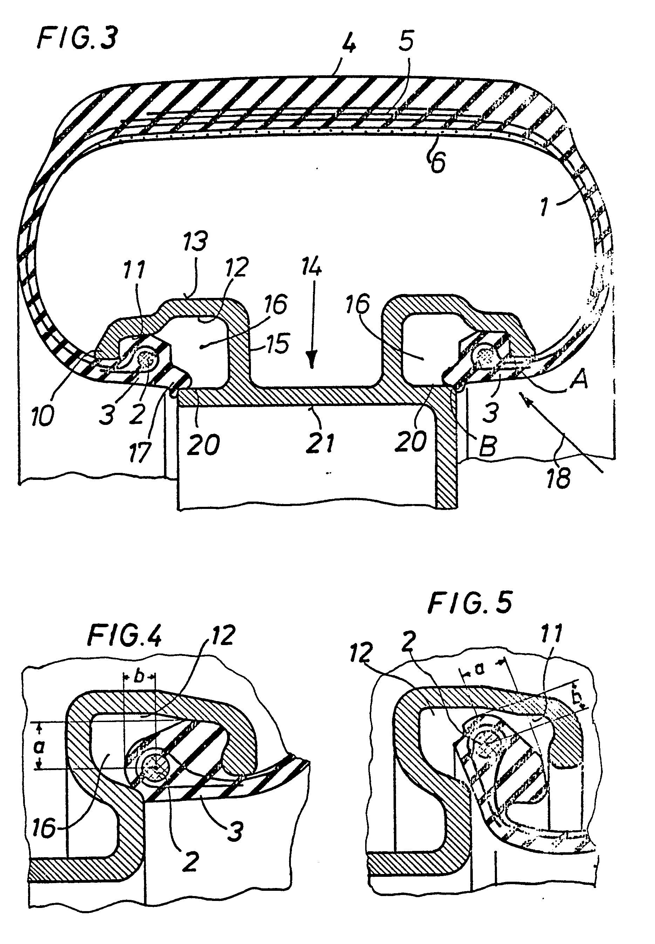

In Fig. 3 ist ein Rad mit einer ebenfalls von Fig. 1 abweichenden Felgenform dargestellt, die sich vor allem durch ein im Querschnitt rechteckiges Tiefbett 14 und durch ringförmige seitliche Verlängerungen 20 des Tiefbettbodens 21 auszeichnet. Die axial äußeren Kanten B der ringförmigen Verlängerungen 20 dienen als Abstütz- und Dichtflächen für die Nasen 17. Insgesamt weist der Felgenkranz 8 eine kleinere radiale Erstreckung auf, so daß ein größerer Einbauraum 16 für Bremsen gewonnen wird.

Fig. 4 zeigt einen Ausschnitt aus einem Fahrzeugrad, bei dem der Wulstkern 2 in dem Sinn exzentrisch im Reifenwulst 3 gelagert ist, daß in der Betriebsstellung der Abstand a zwischen einer durch den Wulstkernmittelpunkt gelegten Parallelen zur Rotationsachse und der Felgensitzfläche 11 wesentlich größer ist als der Abstand b zum axial inneren Wulstrand. Durch diese Maßnahme wird erreicht, daß man mit einer wesentlich kleineren radialen Erstreckung für das Hochbett 12 auskommt. Fig. 5 stellt das Rad gemäß Fig. 4 in der Montagestellung des Reifenwulstes 3 dar. Die Form des Einbauraums 16 und des Reifenwulstes 3 gemäß Fig. 4 und 5 kann sowohl mit Felgen 7 der Fig. i und 2 als auch mit solchen der Fig. 3 kombiniert weren.

**Patentansprüche**

1. Luftbereiftes Fahrzeugrad mit einer starren Felge (7) und mit einem Fahrzeugluftreifen aus Gummi oder gummiähnlichen Kunststoffen, der eine Karkasse (1) aufweist, die in den Wülsten (3) durch Umschlingen von zug- und druckfesten Wulstkernen (2) verankert ist, bei dem die Felge (7) sich im wesentlichen radial nach innen erstreckende Felgenhörner (10) und neben diesen am radial inneren Umfang Sitzflächen (11) für den Reifen und neben den Sitzflächen (11) Montagehochbetten (12) aufweist, die von senkrechten und/oder schrägen Wänden (15) der Felge (7) begrenzt werden, dadurch gekennzeichnet, daß im Bereich des Montagehochbetts (12) ein Einbauraum (16) mit einer Eintrittsöffnung für den Reifenwulst (3) gebildet wird, und daß der Reifenwulst (3) eine Querschnittsform aufweist, bei der in der Montagestellung des Wulstes (3) die Projektion des Wulstdurchmessers auf eine Senkrechte zur Einführungsrichtung (Pfeil 18) kleiner ist als der Abstand $\bar{A}\bar{B}$ zwischen der Felgenhornspitze (A) und der Anlagekante (B) am Felgenkranz (8), so daß bei der Montage ein Eintauchen des Reifenwulstes (3) in den Einbauraum (16) mit dem Hochbett (12) möglich ist, und bei der in der Betriebsstellung des Reifenwulstes (3) der Wulstduchmesser in der Richtung A-B mindestens so groß ist wie der Abstand $\bar{A}\bar{B}$, so daß der Wulst (3) den Einbauraum (16) mit dem Hochbettbereich (12) verschließt.

2. Fahrzeugrad nach Anspruch 1, dadurch gekennzeichnet, daß der Einbauraum (16) auf der radial inneren Seite durch eine waagerecht oder schräg nach axial außen verlaufende Felgenwand (15, 20) begrenzt ist und daß im axial äußeren Bereich der Wand (15, 20) der benachbarte Reifenwulst (3) mit einer vorstehenden Nase (17) an der Wand (15, 20) anliegt (Bereich B).

3. Fahrzeugrad nach Anspruch 2, dadurch gekennzeichnet, daß im Berührungsbereich (B) zwischen Felgenwand (15, 20) und Wulstnase (17) ein Steg (19) der Felgenwand in eine Nut der Wulstnase (17) eingreift.

4. Fahrzeugrad nach Anspruch 2, dadurch gekennzeichnet, daß die Wulstnase (17) aus einem relativ weichen Gummi besteht.

5. Fahrzeugrad nach Anspruch 1, dadurch gekennzeichnet, daß die lichte Weite ($L_1$) zwischen felgenhorn (10) und der seitlichen Begrenzungswand (15) des Hochbetts (12) mehr als das 1,5-fache der Breite ($L_2$) beträgt, die die Protektion der Wulstbreite (in Betriebsstellung) auf eine Waagerechte einnimmt.

6. Fahrzeugrad nach Anspruch 1, dadurch gekennzeichnet, daß der Wulst (3) um den Wulstkern (2) drehbar ist.

7. Fahrzeugrad nach den Ansprüchen 1 und 6, dadurch gekennzeichnet, daß der Wulstkern (2) in der Weise exzentrisch im Reifenwulst (3) gelagert ist, daß in der Betriebsstellung des Reifens der radiale Abstand (a) vom Wulstkernmittelpunkt zu einer Verlängerung der Felgensitzfläche (11) größer ist als der (b) zum axial inneren Wulstrand.

**Claims**

1. Vehicle wheel fitted with a pneumatic tyre, comprising a rigid rim (7) and a pneumatic vehicle tyre which is formed from rubber or rubber-like plastics materials and has a carcase (1) which is secured in the beads (3) by being looped around substantially inextensible and pressure-resistant bead cores (2), wherein the rim (7) has rim flanges (10), which extend substantially radially inwardly and has, adjacent thereto on the radially inner circumference, seating surfaces (11) for the tyre and has, adjacent to the seating surfaces (11), assembly high beds (12) which are defined by vertical and/or sloping walls (15) of the rim (7), characterised in that an installation chamber (16) is formed in the region of the assembly high bed (12) and is provided with an inlet opening for the tyre bead (3), and in that the tyre bead (3) has a cross-sectional form, whereby, in the assembly position of the bead (3), the projection of the bead diameter onto a line vertical to the insertion direction (arrow 18) is smaller than the spacing $\overline{AB}$ between the rim flange tip (A) and the abutment edge (B) against the rim ring (8), so that, during assembly, the tyre bead (3) can enter the installation chamber (16) with the high bed (12), and whereby, in the operational position of the tyre bead (3), the bead diameter in the direction A-B is at least identical to the spacing $\overline{AB}$, so that the bead (3) closes the installation chamber (16) with the high bed region (12).

2. Vehicle wheel according to claim 1, characterised in that the installation chamber (16) on the radially inner end is defined by a rim wall (15, 20) which extends horizontally or inclinedly in an axially outward direction, and in that, in the axially outer region of the wall (15, 20), the neighbouring tyre bead (3) abuts with a projection portion (17) against the wall (15, 20) (region B).

3. Vehicle wheel according to claim 2, characterised in that, in the contact region (B) between rim wall (15, 20) and bead projection portion (17), a flange (19) of the rim wall engages in a groove in the bead projection portion (17).

4. Vehicle wheel according to claim 2, characterised in that the bead projection portion (17) is formed from a relatively soft rubber.

5. Vehicle wheel according to claim 1, characterised in that the clearance ($L_1$) between rim flange (10) and the lateral boundary wall (15) of the high bed (12) is more than 1.5 times the width ($L_2$) which the projection of the bead width (in the operational position) onto a horizontal line adopts.

6. Vehicle wheel according to claim 1, characterised in that the bead (3) is rotatable about the bead core (2).

7. Vehicle wheel according to claims 1 and 6, characterised in that the bead core (2) is mounted in such an eccentric manner in the tyre bead (3) that, in the operational position of the tyre, the radial spacing (a) from the centre-point of the bead core to an extension of the rim seating surface (11) is greater than spacing (b) relative to the axially inner bead edge.

**Revendications**

1. Roue de véhicule atombile comportant une jante rigide (7) et un pneumatique constitué par du caoutchouc ou par des matières plastiques semblables au caoutchouc et qui possède une carcasse (1) qui est ancrée dans les talons (3) par le fait qu'elle enveloppe des tringles (2) résistantes à la traction et à la compression, et dans lequel la jante (7) comporte des rebords de jante (10) qui s'étendent essentiellement radialement vers l'intérieur et des surfaces (11) d'appui pour le pneumatique, situées à côté de ces rebords de jante sur le pourtour intérieur du point de vue radial, et, à côté des surfaces d'appui (11), des zones d'appui surélevées de montage (12), qui sont limitées par des parois verticales et/ou obliques (15) de la jante (7), caractérisée en ce qu'un espace de montage (16) comportant une ouverture d'entrée pour le talon (3) du pneumatique est formé au voisinage de la zone d'appui surélevée de montage (12), et que le talon (3) du pneumatique possède une forme en coupe transversale, avec laquelle, lorsque le talon (3) est dans la position de montage, la protection du diamètre du talon sur une perpendiculaire à la direction d'introduction (flèche 18) est inférieure à la distance $\overline{AB}$ entre la pointe (A) du rebord de jante et le bord (B) d'application sur la couronne (8) de la jante, de sorte que lors du montage, une insertion du talon (3) du pneumatique dans l'espace de montage (16) muni de la zone d'appui surélevée (12) est possible, et avec laquelle, lorsque le talon (3) du pneumatique est dans la position de service, le diamètre du talon dans la direction A-B possède une valeur égale au moins à la distance $\overline{AB}$ de sorte que le talon (3) ferme l'espace de montage (16) muni de la zone d'appui surélevée (12).

2. Roue de véhicule selon la revendication 1, caractérisée en ce que l'espace de montage (16) est limité, sur le côté intérieur du point de vue radial, par une paroi de jante (15, 20) horizontale ou oblique, située à l'extérieur du point de vue axial, et que dans la zone, extérieure du point de vue axial de la paroi (15, 20), le talon voisin (3) du pneumatique s'applique par un bec saillant (17) contre la paroi (15, 20) (zone B).

3. Roue de véhicule selon la revendication 2, caractérisée en ce que dans la zone de contact (B) entre la paroi (15, 20) de la jante et le bec (17) du talon, une barrette (19) de la paroi de la jante s'engage dans une rainure que comporte le bec (17) du talon.

4. Roue de véhicule selon la revendication 2, caractérisée en ce que le bec (17) du talon est constitué par du caoutchouc relativement mou.

5. Roue de véhicule selon la revendication 1, caractérisée en ce que la distance ($L_1$) de l'espace libre entre le rebord de jante (10) et la paroi latérale de limitation (15) de la zone d'appui surélevée (12) est égale à plus de 1,5 fois la largeur ($L_2$), qui correspond à la projection de la largeur du talon (dans la position de service) sur une horizontale.

6. Roue de véhicule selon la revendication 1, caractérisée en ce que le talon (3) peut pivoter autour de la tringle (2).

7. Roue de véhicule selon les revendications 1 et 6, caractérisée en ce que la tringle (2) est montée d'une manière excentrée dans le talon (3) du pneumatique de telle sorte que, lorsque le pneumatique est dans la position de service, la distance radiale (a) entre le centre de la tringle et un prolongement de la surface d'appui (11), que comporte la jante, est supérieure à la distance (b) entre le centre de la tringle et le bord, intérieur dans la direction axiale, du talon.

FIG. 1

FIG. 2

FIG.3

FIG.4

FIG.5